# EUROPÄISCHE PATENTSCHRIFT

(11) **EP 2 263 955 B1**
(45) Veröffentlichungstag und Bekanntmachung des Hinweises auf die Patenterteilung: **09.10.2013**
(21) Anmeldenummer: 10004471.8
(22) Anmeldetag: 28.04.2010
(51) Int. Cl.: B65G 47/31, B65G 47/68, B65G 47/28

(54) **Positionierungsabschnitt für eine Förderanlage**
Positioning section for a conveyor
Section de positionnement pour un transporteur

(30) Priorität: 20.06.2009 DE 102009025702
(43) Veröffentlichungstag der Anmeldung: 22.12.2010
(73) Patentinhaber: TRANSNORM SYSTEM GmbH, 31177 Harsum (DE)
(72) Erfinder: Kraemer, Arnd, 31141 Hildesheim (DE)
(74) Vertreter: Siekmann, Gunnar

(56) Entgegenhaltungen:
- EP-A1- 0 885 823
- DE-A1-102007 054 956
- US-A- 3 298 497

## Beschreibung

Die Erfindung betrifft einen Positionierungsabschnitt für eine Förderanlage zum Positionieren von Stückgut auf mindestens einer Transportbahn, wobei der Transportbahn mindestens eine Verschiebeeinrichtung zum Verschieben und/oder Positionieren von Stückgut zugeordnet ist, mindestens eine Transportbahn als Gliederkette ausgebildet ist, mindestens eine Verschiebeeinrichtung als Gliederkette mit daran befestigten Mitnehmern ausgebildet ist, insgesamt mindestens drei Gliederketten in einer Ebene angeordnet sind und die Gliederkette der Transportbahn mit einer anderen Geschwindigkeit umläuft als die Gliederkette der Verschiebeeinrichtung.

Ein Positionierungsabschnitt der eingangs genannten Art ist aus der WO 2007/ 022 142 A2 bekannt.

Ein weiterer Positionierungsabschnitt für eine Förderanlage zum Positionieren von Stückgut nach dem Oberbegriff des Anspruchs 1 wird in der EP 0 885 823 A1 beschrieben.

Der hier offenbarte Positionierungsabschnitt weist einem Transportband eine Verschiebeeinrichtung zum Positionieren von Stückgut zu, wobei die Verschiebeeinrichtung Mitnehmer aufweist. Die Transportbahn und die Verschiebeeinrichtung sind als Gliederketten ausgebildet, wobei mindestens drei Gliederketten in einer Ebene laufen. Die Geschwindigkeit der Transportbahn unterscheidet sich von der der Verschiebeeinrichtung. Die Mitnehmer, die zur Positionierung des Stückguts dienen, sind auf Gliederketten positioniert. Sie überragen das seitlich neben der Gliederkette laufende Transportband nicht.

Die US 3,298,497 A beschreibt einen Transfermechanismus für Transportbänder. Durch den Mechanismus werden Stückgüter von einem Transportband auf ein anderes befördert, wobei die Stückgüter gekippt werden können. Auf dem abführenden Transportband sind in festen Abständen Bügel befestigt, zwischen denen die Stückgüter positioniert werden. Die Bügel dienen jedoch nicht der weiteren Positionierung. Sie dienen lediglich in einer anderen Ausführung der Vorrichtung dem periodischen Betätigen eines Schalters. Die Positionierung des Stückguts wird von dem Transfermechanismus vorgenommen.

Die DE 10 2007 054 956 A1 beschreibt einen Mehrzuggruppierer. Stückgüter werden dem Mehrzuggruppierer in unregelmäßigen Abständen von einer Beladestation zugeführt. Die Züge der Gruppierungseinrichtung weisen jeweils Antriebe mit Drehzahlreglern auf, die von einer zentralen Steuerung gesteuert werden. Durch die zentrale Steuerung können Stückgüter in gewünschten Abständen an einer Entladestation übergeben werden.

Bei einem Zusammenführen von Transportlinien mit hohen Leistungen, z. B. von über 4.000 Einheiten pro Stunde, werden regelmäßig Taktbänder zur Erzeugung eines Reißverschlussverfahrens eingesetzt. Die hohe Taktzahl und/oder Geschwindigkeit führt dabei jedoch häufig zu Steuerungsproblemen bzw. Steuerungsaufwand. Die Zykluszeiten der SPS, das Ansprechverhalten der Antriebe, Elastizitäten der Mechanik und Massenträgheiten des Fördergurtes ergeben eine Positionierungstoleranz, die ein Zusammenführen einzelner Produkte in der Leistung begrenzt.

Der Erfindung liegt die Aufgabe zugrunde, eine weitgehend mechanische Lösung zu schaffen, mit der ein Zusammenführen von Transportlinien besonders zuverlässig möglich ist.

Die Lösung der Aufgabe erfolgt gemäß den Merkmalen von Anspruch 1.

Bei einem Positionierungsabschnitt für eine Förderanlage zum Positionieren von Stückgut auf mindestens einer Transportbahn, wobei der Transportbahn mindestens eine Verschiebeeinrichtung zum Verschieben und/oder Positionieren von Stückgut zugeordnet ist, mindestens eine Transportbahn als Gliederkette ausgebildet ist, mindestens eine Verschieberichtung als Gliederkette mit daran befestigen und die Transportbahn mindestens teilweise überragenden Mitnehmern ausgebildet ist, insgesamt mindestens drei Gliederketten in einer Ebene angeordnet sind und die Gliederkette der Transportbahn mit einer anderen Geschwindigkeit umläuft als die Gliederkette der Verschiebeeinrichtung, ist erfindungswesentlich vorgesehen, dass der Positionierungsabschnitt zwei Transportbahnen und eine zwischen den Transportbahnen angeordnete Verschiebeeinrichtung in Form einer Gliederkette mit daran befestigten Mitnehmern aufweist, die ausgehend von der Verschiebeeinrichtung alternierend zu beiden Seiten ausgerichtet sind und die Transportbahn mindestens teilweise überragen.

Durch die Verwendung von Gliederketten wird eine besonders einfache und zuverlässig arbeitende Vorrichtung geschaffen. Die Gliederketten sind insgesamt auch so beschaffen, dass eine vergleichsweise geringe Oberflächenreibung beim Verschieben einzelner Gegenstände auf der Gliederkette vorhanden ist. Durch die einheitliche Verwendung von Gliederketten als Transportbahn und als Verschiebeeinrichtung können diese in einer Ebene ausgebildet sein. Dadurch wird ein besonders einfacher und zuverlässiger Aufbau des Positionierungsabschnitts erreicht. Die nebeneinander liegenden Gliederketten, deren Zahl zwischen drei und fünf und eventuell noch mehr variieren kann, bilden eine Ebene aus, diese ist, abgesehen von notwendigen schmalen Spalten zwischen den einzelnen Gliederketten durchgängig. Die Gliederkette ist dabei bevorzugt so ausgebildet, dass sie im "Geradeauslauf' eine geschlossene oder zumindest weitestgehend geschlossene Oberfläche ausbildet.

In der erfindungsgemäßen Ausführungsform weist der Positionierungsabschnitt zwei Transportbahnen und eine zwischen den Transportbahnen angeordnete Verschiebeeinrichtung in Form einer Gliederkette mit daran befestigten Mitnehmern auf, die ausgehend von der Verschiebeeinrichtung alternierend zu beiden Seiten ausgerichtet sind und die Transportbahn mindestens teilweise überragen. Mit einer solchen Ausführungsform werden zwei Stückgutlinien auf zwei getrennten Transportbahnen geführt. Die Positionierung erfolgt durch die zentral angeordnete Verschiebeeinrichtung bzw. eine zentral angeordnete Gliederkette, an der sich nach rechts und links erstreckende Mitnehmer angeordnet sind, die die Position auf den beiden Transportbahnen bestimmen. Die Mitnehmer sind dabei nur einseitig, nämlich an der zentral angeordneten Verschiebeeinrichtung befestigt. Alternativ wäre es natürlich auch möglich, eine Transportbahn mit jeweils einer zugehörigen Verschiebeeinrichtung auszubilden. Diese beiden Verschiebeeinrichtungen könnten alternativ entweder zentral oder im Außenbereich der Transportbänder verlaufen.

In einer besonders bevorzugten Ausgestaltung der Erfindung weist der Positionierungsabschnitt insgesamt fünf Gliederketten auf. Dabei sind zwei Transportbahnen und drei Verschiebeeinrichtungen vorgesehen, wobei die Verschiebeeinrichtungen in Form von Gliederketten ausgebildet sind, die in der Reihenfolge alternierend mit den Transportbahnen angeordnet sind. Dabei ist bevorzugt ein Mitnehmer an seinen beiden Endbereichen jeweils an beiden Seiten der Transportbahn an den umlaufenden Gliederketten der Verschiebeeinrichtung befestigt. Die Mitnehmer sind dabei versetzt zueinander angeordnet, so dass die beiden Stückgutlinien auf den beiden Transportbahnen ebenfalls versetzt zueinander angeordnet sind und so ein Zusammenführen der auf den beiden Transportbahnen transportierten Stückgüter hinter dem Positionierungsabschnitt auf einer Linie möglich ist.

In einer bevorzugten Ausführungsform der Erfindung ist die Umlaufgeschwindigkeit der Gliederkette der Transportbahn größer als die Umlaufgeschwindigkeit der Gliederkette der Verschiebeeinrichtung. Das bedeutet, dass die auf der Transportbahn transportierten Stückgüter auf die mit geringerer Geschwindigkeit laufenden Mitnehmer, die von der Gliederkette der Verschiebeeinrichtung angetrieben werden, auflaufen. Bei dieser Ausführungsform ist der Mitnehmer also vor den Stückgütern. In einer alternativen Ausführungsform der Erfindung ist die Umlaufgeschwindigkeit der Gliederkette der Transportbahn kleiner als die Umlaufgeschwindigkeit der Gliederkette der Verschiebeeinrichtung. In diesem Fall gibt also die schneller laufende Gliederkette der Verschiebeeinrichtung mit den schneller laufenden Mitnehmern die Position vor und schiebt die Stückgüter entsprechend vor sich her. Der Antrieb kann dabei auf verschiedene Weisen erfolgen. Entweder kann jede einzelne Gliederkette durch einen eigenen Motor angetrieben werden, wobei dann die Synchronisierung durch entsprechende elektronische Steuerungen erfolgten, so dass die Transportbahn mit einer einheitlichen Geschwindigkeit angetrieben werden und die Gliederketten mit einer anderen eigenen Geschwindigkeit angetrieben werden. Alternativ besteht natürlich auch die Möglichkeit, nur einen Motor zu verwenden, der durch eine Getriebeübersetzung zwei verschiedene Bandgeschwindigkeiten erzeugt und entsprechend auf die Wellen der Transportbahnen und die Gliederketten der Verschiebeeinrichtung übertragen werden.

In einer weiteren Ausgestaltung der Erfindung betrifft diese auch eine Förderanlage mit einem oben beschriebenen Positionierungsabschnitt und einem Zuführbereich und einem Abführbereich. Der Zuführbereich weist dabei mehrere Linien auf, in denen Stückgüter zugeführt werden. Die Zahl der Linien des Zuführbereichs entspricht bevorzugt der Anzahl der Bahn des Positionierungsabschnitts. Es ist jedoch auch möglich, mehrere Linien des Zuführbereichs auf eine Bahn des Positionierungsabschnitts zu fördern. Dies kann insbesondere durch zusätzliche seitliche Zuführungsbahnen erfolgen. Nachfolgend wird Erfindung anhand eines in der Zeichnung dargestellten Ausführungsbeispiels weiter erläutert. Die schematischen Darstellungen zeigen in
- Fig. 1:: eine Förderanlage mit einem erfindungsgemäßen Positionierungsabschnitt; und
- Fig. 2:: eine perspektivische Ansicht eines erfindungsgemäßen Positionierungsabschnittes.

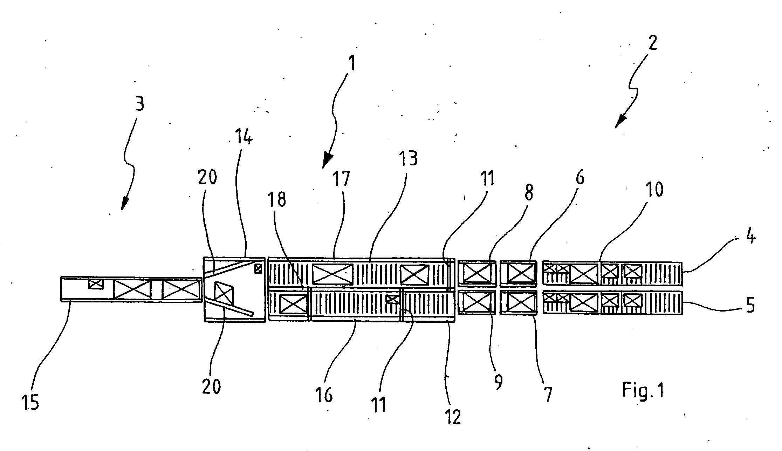

Die Förderanlage weist im Wesentlichen einen Positionierungsabschnitt 1, einen Zuführbereich 2 und einen Abführbereich 3 auf. Der Zuführbereich 2 weist zwei Linien 4 und 5 auf, auf denen Stückgut 10 auf angetriebenen Rollenbahnen transportiert wird. Im gezeigten Beispiel hat jede der Bahnen eine Zuförderleistung von 3.000 Stück pro Stunde. Die Geschwindigkeit der Förderlinien 4 und 5 liegt bei etwa 30 m pro Minute. In jeder der Linien 4, 5 ist mindestens ein Zuförderer vorgesehen. In der Linie 4 sind zwei Zuförderer 6, 8 und in der Linie 5 sind zwei Zuförderer 7, 9 vorgesehen. Diese Zuführelemente dienen der Vereinzelung der Stückgüter und der Zuführung in die entsprechenden Fenster des Positionierungsabschnittes 1. Insbesondere die Zuführelemente 8, 9 dienen auch der Geschwindigkeitserhöhung und übergeben das zu transportierende Stückgut 10 mit einer Geschwindigkeit von hier 150 m pro Minute. Diese Geschwindigkeit entspricht der Geschwindigkeit der umlaufenden Mitnehmer 11 des Positionierungsabschnittes 1. Der Positionierungsabschnitt 1 weist zwei parallele Transportbahnen 12 und 13 auf. Die Transportbahn 12 und 13 sind als umlaufende Gliederketten ausgebildet. Weiterhin sind Verschiebeeinrichtungen 16, 17 und 18 dargestellt. Diese Verschiebeeinrichtungen sind ebenfalls als umlaufende Gliederketten ausgebildet. Die Gliederketten 16, 17 und 18 laufen mit einer ersten Geschwindigkeit um, während die Gliederketten der Transportbahnen 12 und 13 mit einer davon abweichenden zweiten Geschwindigkeit umlaufen. Die Geschwindigkeit der Transport 12 und 13 ist also dieselbe. Weiterhin ist die Geschwindigkeit der Gliederketten 16, 17 und 18 dieselbe. Die Verschiebeeinrichtungen weisen Mitnehmerleisten 11 auf, die jeweils eine der Transportbahnen übergreifen. Diese Mitnehmerleisten 11 sind einmal an den Verschiebeeinrichtungen 16 und 18 und einmal an die Verschiebeeinrichtungen 17 und 18 montiert. Die Mitnehmerleisten 11 sind auf den beiden Transportbahnen 12 und 13 versetzt zueinander angeordnet und geben die Position der Stückgüter vor. Im gezeigten Ausführungsbeispiel laufen die Verschiebeeinrichtungen 16, 17 und 18 schneller um als die Transportbahnen 12 und 13. Dies erkennt man daran, dass auf der in Fig. 1 unteren Bahn 12 die Stückgüter von den Mitnehmerleisten vor sich hergeschoben werden. Dadurch ist ein fester Abstand zwischen den Mitnehmern 11 sichergestellt. Die Bahnen 12 und 13 sind bevorzugt mit derselben Geschwindigkeit betrieben wie die Zuführelemente 8 und 9, im vorliegenden Ausführungsbeispiel also mit 150 m pro Minute. Der Abstand zwischen zwei Mitnehmerleisten einer Bahn 12 oder 13 beträgt hier 3.000 mm und die Gesamtlänge des Positionierungsabschnittes beträgt hier 6.000 mm. Die Gesamtlänge des Positionierungsabschnittes ist also doppelt so lang wie der Abstand zweier Mitnehmerleisten einer Bahn. Der Versatz zwischen einer Mitnehmerleiste 11 der Bahn 12 gegenüber einer Mitnehmerleiste 11 der Bahn 13 entspricht der Hälfte des Abstandes zweier Mitnehmerleisten 11 einer Bahn 13, hier also 1.500 mm. Dieser Abstand entspricht dem Abstand zweier Stückgüter 10, die hinterher im Abführbereich 3 zusammengeführt werden. Der Abführbereich 3 weist zunächst ein Zusammenführelement 14 auf, in dem mit zwei Führungsbalken oder Abweisern 20 die Stückgüter 10 von den Transportbahnen 12 und 13 zusammengeführt werden. Die Stückgüter werden dann auf die Ausgangslinie 15 geführt. Sowohl das Zusammenführelement 14 als auch die Ausgangslinie 15 werden mit derselben Geschwindigkeit wie der Positionierungsabschnitt 1, hier also mit 150 m pro Minute betrieben. Der Abstand der Stückgüter 10 beträgt hier 1.500 mm und ist durch den Abstand der umlaufenden Mitnehmer 11 vorgegeben.

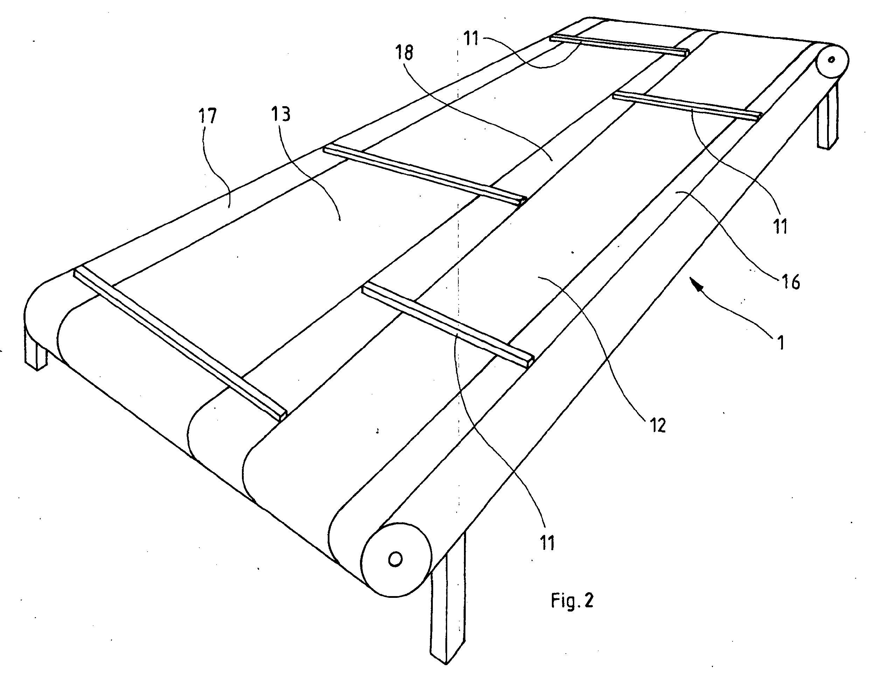

In Fig. 2 ist eine perspektivische Ansicht eines solchen Positionierungsabschnittes dargestellt. Gleiche Teile sind mit gleichen Bezugszeichen gekennzeichnet. In Fig. 2 ist insbesondere auch zu erkennen, dass die fünf Gliederketten 12, 13, 16, 17 und 18 eine gemeinsame Ebene ausbilden. Zwischen den Gliederketten sind nur einzelne Spalte, die hinsichtlich der Laufeigenschaften notwendig sind. An den Enden des Positionierungsabschnittes laufen die fünf Gliederketten jeweils um eine gemeinsame Achse. Die einzelnen Achsabschnitte, die die Transportbahn .12 und 13 oder den Verschiebeeinrichtungen 16, 17 und 18 zugeordnet sind, weisen mit unterschiedlichen Geschwindigkeiten angetriebene Wellen auf. Das oben beschriebene Prinzip ist auch mit drei, vier oder mehr Linien durchführbar. Es sind auch andere Geschwindigkeiten und Abstände als die oben beschriebenen einsetzbar.

## Patentansprüche

1. Positionierungsabschnitt (1) für eine Förderanlage zum Positionieren von Stückgut (10) auf mindestens einer Transportbahn (12, 13), wobei der Transportbahn (12, 13) mindestens eine Verschiebeeinrichtung (16, 17, 18) zum Verschieben und/oder Positionieren von Stückgut (10) zugeordnet ist, mindestens eine Transportbahn (12, 13) als Gliederkette ausgebildet ist, mindestens eine Verschiebeeinrichtung (16, 17, 18) als Gliederkette mit daran befestigten Mitnehmern (11) ausgebildet ist, insgesamt mindestens drei Gliederketten in einer Ebene angeordnet sind und die Gliederkette der Transportbahn (12, 13) mit einer anderen Geschwindigkeit umläuft als die Gliederkette der Verschiebeeinrichtung (16, 17, 18),
**dadurch gekennzeichnet,**
**dass** der Positionierungsabschnitt (1) zwei Transportbahnen (12, 13) und eine zwischen den Transportbahnen (12, 13) angeordnete Verschiebeeinrichtung (18) in Form einer Gliederkette mit daran befestigten Mitnehmern (11) aufweist, die ausgehend von der Verschiebeeinrichtung (18) alternierend zu beiden Seiten ausgerichtet sind und die Transportbahn (12, 13) mindestens teilweise überragen.

2. Positionierungsabschnitt nach Anspruch 1, **dadurch gekennzeichnet, dass** der Positionierungsabschnitt (1) zwei weitere Verschiebeeinrichtungen (16, 17) aufweist, wobei die Verschiebeeinrichtungen (16, 17, 18) in Form von umlaufenden Gliederketten ausgebildet sind, die in der Reihenfolge alternierend mit den Transportbahnen (12, 13) ausgebildet sind, und dass ein Mitnehmer (11) an seinen beiden Endbereichen jeweils an beiden Seiten der Transportbahn an den umlaufenden Gliederketten zweier Verschiebeeinrichtungen befestigt ist.

3. Positionierungsabschnitt nach einem der vorhergehenden Ansprüche, **dadurch gekennzeichnet, dass** die Umlaufgeschwindigkeit der Gliederkette der Transportbahn (12, 13) größer ist als die Umlaufgeschwindigkeit der Gliederkette der Verschiebeeinrichtung (16, 17, 18).

4. Positionierungsabschnitt nach einem Anspruche 1 oder 2, **dadurch gekennzeichnet, dass** die Umlaufgeschwindigkeit der Gliederkette der Transportbahn (12, 13) kleiner ist als die Umlaufgeschwindigkeit der Gliederkette der Verschiebeeinrichtung (16, 17, 18).

5. Förderanlage mit einem Positionierungsabschnitt (1) nach einem der vorhergehenden Ansprüche und einem Zuführbereich (2) und einen Abführbereich (3).

## Claims

1. A positioning section (1) for a conveyor system that serves for positioning piece goods (10) on at least one transport track (12, 13), wherein at least one shifting device (16, 17, 18) for shifting and/or positioning piece goods (10) is assigned to the transport track (12, 13), wherein at least one transport track (12, 13) is realized in the form of a link chain, wherein at least one shifting device (16, 17, 18) is realized in the form of a link chain with drivers (11) mounted thereon, wherein a total of at least three link chains are arranged in one plane, and wherein the link chain of the transport track (12, 13) revolves with a different speed than the link chain of the shifting device (16, 17, 18),
**characterized in**
**that** the positioning section (1) features two transport tracks (12, 13) and a shifting device (18) that is arranged between the transport tracks (12, 13) and realized in the form of a link chain with drivers (11) mounted thereon, wherein said drivers are alternately oriented toward both sides starting at the shifting device (18) and at least partially protrude over the transport track (12, 13).

2. The positioning section according to Claim 1, **characterized in that** the positioning section (1) features two further shifting devices (16, 17), wherein the shifting devices (16, 17, 18) are realized in the form of revolving link chains that are realized in a sequentially alternating fashion with the transport tracks (12, 13), and **in that** a driver (11) is respectively mounted with its two end regions on the revolving link chains of two shifting devices on both sides of the transport track.

3. The positioning section according to one of the preceding claims, **characterized in that** the velocity of revolution of the link chain of the transport track (12, 13) is faster than the velocity of revolution of the link chain of the shifting device (16, 17, 18).

4. The positioning section according to Claim 1 or 2, **characterized in that** the velocity of revolution of the link chain of the transport track (12, 13) is slower than the velocity of revolution of the link chain of the shifting device (16, 17, 18).

5. A conveyor system with a positioning section (1) according to one of the preceding claims and with a supply area (2) and a delivery area (3).

## Revendications

1. Section de positionnement (1) pour dispositif convoyeur, permettant le positionnement de produits unitaires (10) sur au moins une bande transporteuse (12, 13), dans laquelle est associé à la bande transporteuse (12, 13) au moins un dispositif de déplacement (16, 17, 18) permettant le déplacement et/ou le positionnement de produits unitaires (10), au moins une bande transporteuse (12, 13) se présente sous forme d'une chaîne à maillons, au moins un dispositif de déplacement (16, 17, 18) se présente sous forme d'une chaîne à maillons à laquelle sont fixés des entraîneurs (11), au total au moins trois chaînes à maillons sont disposées dans un plan et la chaîne à maillons de la bande transporteuse (12, 13) tourne à une vitesse différente de la chaîne à maillons du dispositif de déplacement (16, 17, 18),
**caractérisée en ce que**
la section de positionnement (1) présente deux bandes transporteuses (12, 13) et un dispositif de déplacement (18) disposé entre les bandes transporteuses (12, 13) sous forme d'une chaîne à maillons à laquelle sont fixés des entraîneurs (11) qui sont dirigés en alternance vers les deux côtés à partir du dispositif de déplacement (18) et dépassent au moins partiellement de la bande transporteuse (12, 13).

2. Section de positionnement selon la revendication 1, **caractérisée en ce que** la section de positionnement (1) présente d'autres dispositifs de déplacement (16, 17), les dispositifs de déplacement (16, 17, 18) se présentent sous forme de chaînes à maillons en rotation qui alternent dans l'ordre avec les bandes transporteuses (12, 13) et qu'un entraîneur (11) est fixé à ses deux extrémités respectivement des deux côtés de la bande transporteuse au niveau des chaînes à maillons en rotation de deux dispositifs de déplacement.

3. Section de positionnement selon une des revendications précédentes, **caractérisée en ce que** la vitesse de rotation de la chaîne à maillons de la bande transporteuse (12, 13) est supérieure à la vitesse de rotation de la chaîne à maillons du dispositif de déplacement (16, 17, 18).

4. Section de positionnement selon une des revendications 1 ou 2, **caractérisée en ce que** la vitesse de rotation de la chaîne à maillons de la bande transporteuse (12, 13) est inférieure à la vitesse de rotation de la chaîne à maillons du dispositif de déplacement (16, 17, 18).

5. Dispositif convoyeur comportant une section de positionnement (1) selon une des revendications précédentes, une zone d'acheminement (2) et une zone d'évacuation (3).
